# EUROPEAN PATENT APPLICATION

(11) **EP 1 517 057 A2**
(43) Date of publication of application: **23.03.2005**
(21) Application number: 04022548.4
(22) Date of filing: 22.09.2004
(51) Int. Cl.: F16C 33/10, G11B 19/20

(54) **Dynamic pressure thrust bearing part and method of manufacturing dynamic pressure thrust bearing part**

(30) Priority: 22.09.2003 JP 2003330333; 22.09.2003 JP 2003330346
(71) Applicant: Relial Corporation, Akishima-shi, Tokyo 196-0034 (JP)
(72) Inventor: Satoh, Kimio, Akishima-shi Tokyo 196-0012 (JP)
(74) Representative: Betten & Resch

(57) **Abstract**

To manufacture a dynamic pressure bearing part at a low cost, capable of making consumption power small by reducing a load of rotation and having remarkable durability while ensuring small size and high performance. Dynamic pressure generating projection parts 21 are formed on the surface of an annular ring, which is a material of the dynamic pressure bearing part having a profile shape of a herringbone type having a first belt-like part 11L and a second belt-like part 11R which are branched out from a tip end 21S to a rear end so as to form a double fork shape, and widths of which are made to be approximately fixed widths. The material of the dynamic pressure bearing part is subjected to a magnetic barrel polish processing to obtain the dynamic pressure thrust bearing part.

## Description

### BACKGROUND OF THE INVENTION

### 1, Field of the Invention

The present invention relates to a dynamic pressure thrust bearing part forming a dynamic pressure generation part of a dynamic pressure bearing device used as a thrust bearing of a rotation part of a disk rotary type memory device such as a driving device including a hard disk drive (HDD) and a digital versatile disk (DVD), and a polygon mirror, etc., and a method of manufacturing the dynamic pressure bearing part.

### 2. Description of the Related Art

Generally, a dynamic pressure bearing device functions to rotatably support a rotating shaft by providing dynamic pressure to an actuating fluid, which is filled in a space between a rotation part including a rotating shaft and a stationary part, by using rotating force of the rotating shaft, with the rotation part floated over the stationary part by the dynamic pressure. The dynamic pressure bearing device includes a device operating as a journal bearing and a device operating as a thrust bearing. In either device, the dynamic pressure bearing part having a recess/projection pattern formed on the surface is used for generating the dynamic pressure by applying a prescribed physical force caused by the rotation on the actuating fluid.

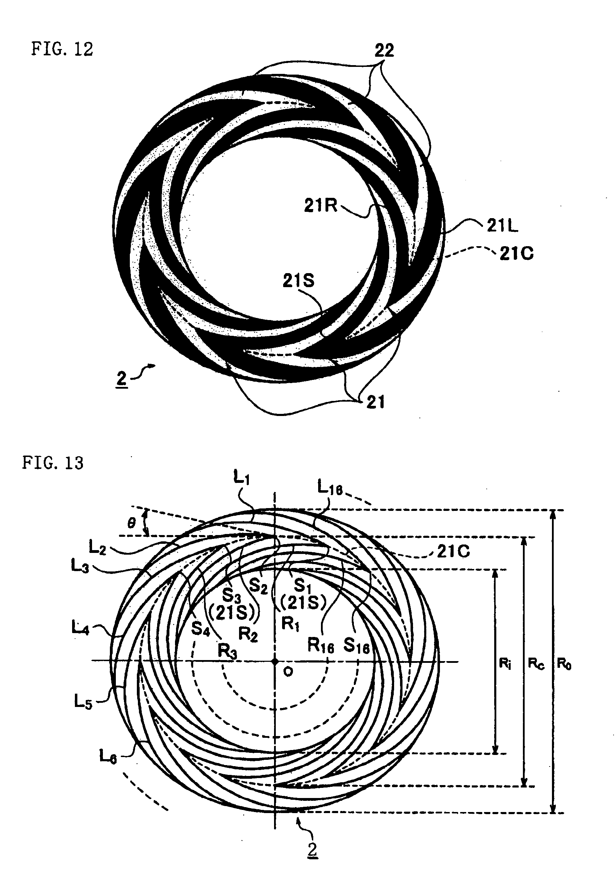

As the device operating as a thrust bearing, a dynamic pressure thrust bearing part having a recess/projection pattern formed on the surface is used for generating the dynamic pressure in a thrust direction. Fig. 12 is a view illustrating a conventional dynamic pressure thrust bearing part. As shown in Fig. 12, in the conventional dynamic pressure thrust bearing part 2, a metallic plate material is machined into an annular form, and a plurality of dynamic pressure generating projection patterns 21 are formed on the surface of one of the annular body, so as to be circular symmetrical against the center point of the annular body, while the other part other than the part of the dynamic pressure generating projection patterns 21 has recess patterns 22.

The dynamic pressure generating projection patterns 21 have a profile shape of a herringbone type having a first belt-like part 21L and a second belt-like part 21R which are branched out from a tip end 21S to a rear end, so as to form a double fork shape. Fig. 13 is an explanatory view of the profile curves of the dynamic pressure generating projection patterns 21. In Fig. 13, a circle on the surface of the annular ring having radius of Rc around center O, is defined as a center circle 21C, specifying the center point of the annular ring as O, specifying the inner diameter of the annular ring as Ri, and specifying the outer diameter of the annular ring as Ro. In this case, equation expressed by Rc²=(1/2)(Ro² + Ri²) is established.

The profile curves of the dynamic pressure generating projection part patterns 21 are constituted by 16 curving lines L1 to L16 extended toward the outside the annular ring, specifying 16 points S1 to S16 as tip ends equally dividing the circumference of the center circle 21C, and 16 curving lines R1 to R16 extended toward inside the annular ring. These curving lines serve as logarithmic curves intersecting with the circle around the center O, so as to form a constant angle θ at arbitrary points on the curves. Thus, if the flow of the fluid caused by rotation is directed toward the tip end 21S from the rear end of the herringbone, the force strong enough to collect the fluid in the center circle 21C is applied to generate the dynamic pressure in the thrust direction.

Here, for example, in the dynamic pressure bearing device of a small-sized motor such as an HDD spindle motor, in view of the opposing area, load capacity, and viscosity of the fluid, dimension of space width formed between the rotation part and the stationary part when the rotation part is supported by levitation to the stationary part by the dynamic pressure generated by the rotation of the rotating shaft, is generally set to be 2 to about 3µm ± 0.5µm, which are extremely small space. In addition, the height of the surface recess/projection patterns of the dynamic pressure generating bearing member used for the dynamic pressure bearing device used in the above case is also set to be about 5 to 20µm.

Therefore, manufacture of the dynamic pressure bearing part having a dynamic pressure generating bearing member and a dynamic pressure bearing member as the mating member requires high machining accuracy. Accordingly, for example, the manufacture of the dynamic pressure generating bearing member comprises:
forming dynamic pressure generating recess/projection patterns on a prescribed surface of a dynamic pressure bearing part material by applying a photolithography method; and thereafter
surface machining by applying precise polishing by using an abrasive grain on the recess/projection patterned surface to obtain a surface having high accuracy in planarity and low roughness. In addition, the dynamic pressure bearing member serving as the mating member of the dynamic pressure bearing part is worked so as to form a prescribed bearing space when arranged opposed to the dynamic pressure generating bearing member, and thereafter, precise polishing by using the abrasive grain is similarly applied on the surface part, thereby applying precise surfacing to obtain the surface having high accuracy in planarity and low roughness.

Meanwhile, for example, while modification of HDD and new development have been progressed, the bearing device of the HDD spindle motor has been subjected to further tough requirements. Particularly, tough requirement has been directed to decrease power consumption by reducing load of rotation. The aforementioned conventional dynamic thrust bearing part can not necessarily sufficiently respond to such a requirement.

In addition, for example, miniaturization of the bearing device of the HDD spindle motor through reduction in the scale of the hard disk is required, further improvement in durability is required, and a structure suited for improvement of productivity and cost reduction is required. Against such requirements, it is considered that the dynamic pressure bearing device is advantageous in principle, if compared with other type bearing device such as a conventional ball bearing type bearing device. However, it has been found that the dynamic bearing device can not necessarily sufficiently respond to the requirements of recent years in some cases.

Specifically, HDD reads and writes information by floating and moving a magnetic head over the hard disk, and the operation in a so-called CSS (contact/start/stop) system is mostly used. In the CSS system, the operation of rotation and stop is repeated all the time, and therefore the bearing device of the spindle motor is required to have a sufficient durability against the repeated operation of rotation and stop.

It has been found that although the dynamic pressure bearing device using the above-described conventional dynamic pressure bearing part has a constant durability (durability of 400,000 times repeat, it is difficult to obtain further durability. Moreover, although it is an extremely rare case, even after extremely frequent durability test, a shaft is brought into tight contact with a bearing during CSS, thereby posing the problem of failing in start in some cases.

### SUMMARY OF THE INVENTION

An object of the present invention is to provide a method of manufacturing a dynamic pressure bearing part capable of decreasing consumption power by reducing a load of rotation, and also capable of manufacturing a dynamic pressure bearing part ensuring a small-size and high-performance, while having an extremely good durability at a low cost.

In order to solve the above-described problem, a first feature of the present invention provides a dynamic pressure thrust bearing part formed with a dynamic pressure generating pattern comprising projection and recess on a surface, for generating dynamic pressure in a thrust direction, wherein the dynamic pressure generating projection pattern has a profile shape of a herringbone type having belt-like parts which are branched out from a tip end to a rear end so as to form a double fork shape, and width of the belt-like part is set to be approximately constant.

A second feature provides the dynamic pressure thrust bearing part according to the first feature, wherein an area of the projection pattern is made to be smaller than the area of the recess pattern.

A third feature provides the dynamic pressure thrust bearing part according to the first and second features, wherein a plurality of herringbone tips are arranged so as to be located on a central line for drawing a specific circle around the center of rotation of the bearing member, and a contour line facing the central line side has a dynamic pressure generating curve for generating the dynamic pressure by crossing the flow of the fluid at a predetermined angle, to collect the fluid in the central line.

A fourth feature provides the dynamic pressure thrust bearing part according to any one of the first to third features, wherein the dynamic pressure generating curve is a curve by which distance from the center of rotation varies with logarithm against variations of the rotation angle.

A fifth feature provides the dynamic pressure thrust bearing part according to any one of the first to fourth features, wherein an approximately belt-like splash preventing projection pattern is formed separately from the dynamic pressure generating pattern, the splash preventing projection pattern having a contour shape to act for pulling the liquid supposed to be splashed to the outside through a centrifugal force generated through rotation.

A sixth feature provides a method for manufacturing a dynamic pressure bearing part for manufacturing the dynamic pressure bearing part, comprising:
machining a material of the dynamic pressure bearing part into a predetermined shape; and
machining the surface of the material of the dynamic pressure bearing part thus machined into the predetermined shape, into a predetermined surface condition,
wherein the surface machining step has a magnetic barrel polish processing which functions to polish a material to be polished in such a manner that a fluid, magnetic media serving as a body to be polished, and a body to be polished are contained in a vessel, and the magnetic media is caused to move by a magnetic field generated by motion in the outer part, thereby polishing the body to be polished.

A seventh feature provides a method of manufacturing the dynamic pressure bearing part according to the sixth feature, wherein the surface machining step performs the magnetic barrel polish processing after precisely polishing by using the abrasive grain.

An eighth feature provides a method of manufacturing the dynamic pressure bearing part according to the sixth and seventh features , wherein the magnetic media used for magnetic barrel polishing is made by setting a magnetic stainless steel wire of a predetermined length.

In the above-described features, it has been found that by setting the width of a belt-like part to be approximately constant, the opposing area of the projection pattern and the mating part having a bearing space formed therebetween can be made smaller in comparison with a conventional one, and a load of rotation can thereby be made smaller. Specifically, as described above, the conventional dynamic pressure thrust bearing part as shown in Fig.12 and Fig.13 is constituted of logarithmic curves L1 to L16, and R1 to R16, and each distance between L1 and L2, between L2 and L3, and between L3 and L4 becomes larger toward the outer side of the annular ring. Also, the distance between L1 and L16 is made larger than the distance between R1 and R16.

According to the present invention, it has been found that (a) The load of rotation largely depends on the size of the opposing area of the dynamic pressure generating projection pattern and the mating part having the bearing space formed therebetween, (b) If considering an object is to generate dynamic pressure, it is neither necessary to make the distance between L1 and L16 larger toward the outer side of the annular ring, nor necessary to make the distance between L1 and L16 larger than the distance between R1 and R16, (C) If considering an object is to generate the dynamic pressure, only the contour part may cross the flow of the fluid at angle θ, to collect the fluid in the central line, and therefore the curves of the other contour parts may be arbitrary in principle, (d) Only the contour part that functions to collect the fluid in the central line is made to cross the flow of the fluid at a predetermined angle, and by making the width of the belt-like part approximately constant, for example, by making it constant with the smallest width capable of maintaining the shape and performing pattern machining (first feature), the area of the projection pattern can be made smaller than the area of the recess pattern (second feature), and as a result, the opposing area of the dynamic pressure generating projection pattern and the mating part having the bearing space formed therebetween can be made smaller than the conventional one, thereby allowing the consumption power to be reduced by an amount of the area thus made to be smaller, (e) Specifically, the dynamic pressure generating pattern may be constituted as described in feature 3 to feature 4.

In addition, by making the area of the dynamic pressure projection pattern smaller, an approximately belt-like splash preventing projection pattern having a contour shape to act for pulling the liquid supposed to be splashed to the outside through a centrifugal force generated through rotation is formed separately from the dynamic pressure generating pattern (fifth feature), thereby extremely increasing the degree of freedom in terms of designing.

Also, in the above-described feature, it has been found that an action effect can be obtained in such a way that the bearing device has an extreme durability by performing magnetic barrel polishing in a polishing step without an occurrence such that a shaft is brought into tight contact with a bearing during CSS, thereby arising the problem of failing in start, and it can be manufactured extremely easily. The above-described effect can be found for the first time by applying the magnetic barrel polishing, through a trial and error process of various surface processing by an inventor of this application.

Such a mechanism to obtain the aforementioned action effect has not been clarified in theory. However, the reason is possibly considered as described hereunder. Specifically, by a method for precisely finishing a surface planarity and a surface roughness by carrying out precision polishing by using the conventional abrasive grain, the precision values of the planarity and surface roughness can be extremely high numerically. Therefore, within such a numerically high precision value, it can be considered that the bearing device has an excellent durability. However, as described above, actually, a good result can not necessarily be obtained.

The reason is so considered that in polishing by using the abrasive grain, easily exfoliated scuffing, fuzz, or burrs are frequently generated on a metal surface, and such a scuffing, fuzz, or burrs become foreign substances after exfoliation, thereby causing the breakage of the bearing. Also, sharp recesses/projections are mostly formed on the surface, and therefore the bearing is easily worn during actuation. Further, if the surface roughness is improved to prevent the bearing from being worn, a problem is possibly generated that a shaft is brought into tight contact with the bearing during CSS.

Meanwhile, by performing the magnetic barrel polishing, the easily exfoliated scuffing, fuzz, or burrs are considered to be removed to smooth the metal surface and form loose and moderately large roughness on the surface, and further the metal surface is strengthened to eliminate the possibility of exfoliation, etc. As a result, the effects can be obtained in such a way that durability is extremely improved and generation of a tight contact phenomenon can be prevented, for example.

### BRIEF DESCRIPTION OF THE DRAWINGS

Fig. 1 is a view illustrating a dynamic pressure thrust bearing part according to an embodiment of the present invention.
Fig. 2 is an explanatory view of profile curves of dynamic pressure generating projection patterns 11.
Fig.3 is an explanatory view of a magnetic barrel polish processing in a method of manufacturing the dynamic pressure bearing part according to the embodiment of the present invention.
Fig.4 is a sectional view of a second annular member 33 as the dynamic pressure bearing part according to the embodiment of the present invention.
Fig.5 is a plan view of the second annular member 33.
Fig.6 is a side view of a rotating member 31 as the dynamic pressure bearing part according to the embodiment of the present invention.
Fig.7 is a development view of a recess/projection pattern 31B formed on the surface of the rotating member 31.
Fig.8 is a graph illustrating a measurement result of a surface roughness of the recess/projection pattern after precision polish processing using grinding grains.
Fig.9 is a graph illustrating the measurement result of the surface roughness of the surface of the recess/projection pattern after magnetic barrel polishing.
Fig.10 is a sectional view illustrating an example of assembling the dynamic pressure bearing part according to the embodiment of the present invention into a HDD rotating part 10.
Fig. 11 is an enlarged sectional view of a dynamic pressure bearing device 20.
Fig. 12 is a view illustrating a conventional dynamic pressure thrust bearing part.
Fig. 13 is an explanatory view of profile curves of dynamic pressure generating projection patterns 21.

### DETAILED DESCRIPTION OF THE PREFERRED EMBODIMENTS

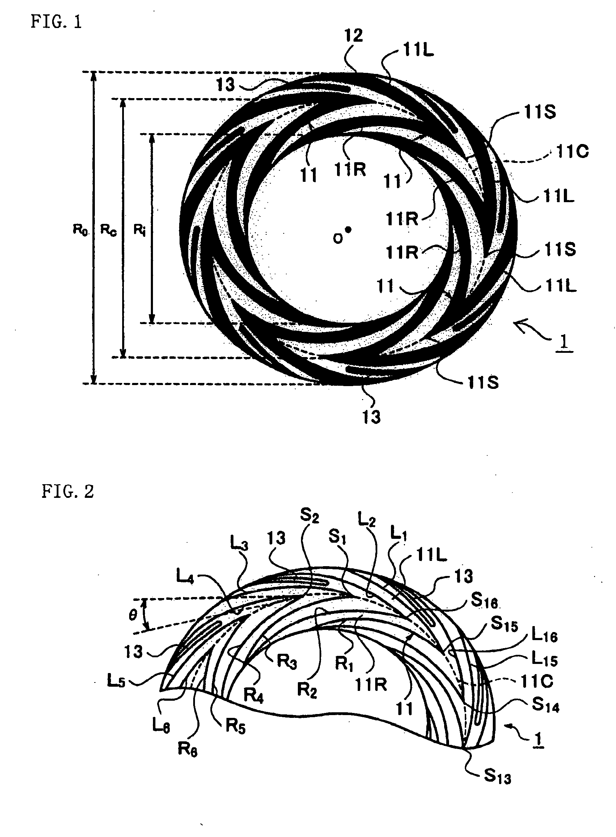

Flg.1 is a view illustrating a dynamic pressure thrust bearing part according to an embodiment of the present invention, and Fig. 2 is an explanatory view of profile curves of dynamic pressure generating projection patterns 11. The dynamic pressure thrust bearing part according to the embodiments of the present invention will be explained with reference to the embodiments hereafter. A dynamic pressure thrust bearing part 1 is constituted in such a manner that a plate material such as aluminum metal, etc. , is machined into an annular form, and eight dynamic pressure generating projection patterns 11 and splash preventing projection patterns 13 are formed on the surface of one of the annular body, so as to be circular symmetrical against the center point of the annular body, while the other part other than the part having dynamic pressure generating projection patterns 11 and the splash preventing projection patterns 13 has recess patterns 12.

The dynamic pressure generating projection patterns 11 have a profile shape of a herringbone type having a first belt-like part 11L and a second belt-like part 11R which are branched out from a tip end 11S to a rear end, so as to form a double fork shape. In Fig. 1, a circle on the surface of the annular ring having radius of Rc around the center O, is defined as a center circle 11C, specifying the center point of a annular ring as O, specifying the inner diameter of the annular ring as Ri, and specifying the outer diameter of the annular ring as Ro. In this case, equation expressed by Rc²= (1/2) (Ro² + R1²) is established. In this embodiment, the equations as expressed by Rc=1.668, and Ro=2.0, and Ri=1.25 are established.

As shown in Fig.2, the profile curves of the dynamic pressure generating projection patterns 11 comprise 16 curves L1 to L16 extended toward outer side of the annular ring and 16 curves R1 to R16 extended toward inner side of the annular ring, setting 16 points S1 to S16, which divide circumference of the center circle 11c equally, as tip ends respectively. In this case, only curves L2, L4, L6, L8, L10, L12, L14, L16 and curves R2, R4, R6, R8, R10, R12, R14, R16 located on the side of the center circle 11S of the dynamic pressure generating projection patterns 11 are logarithmic curves intersecting with the circle around the center O, so as to form a constant angle θ at arbitrary points on the curves. The other curves are formed so as to be approximately parallel to these curves.

Thus, belt-like parts 11L and 11R are formed to have approximately fixed widths. In this embodiment, the widths of the belt-like parts 11L and 11R are formed as narrowly as they can to set to be about 0.11mm. In addition, splash preventing patterns 13 are formed between mutual first belt-like parts 11L. The splash preventing patterns 13 serve as an approximately belt-like splash preventing projection pattern having a contour shape to act for pulling the liquid supposed to be splashed to the outside through a centrifugal force generated through rotation and have shapes formed approximately along the first belt-like part 11L in a little bit shorter length than the length of the first belt-like part 11L. In this embodiment, the splash preventing patterns 13 are formed in about 0.05mm in widths and 0.8mm in lengths.

In the above-described structure, if the flow of the fluid caused by rotation is directed toward the tip end 11S from the rear end of the herringbone, the force strong enough to collect the fluid in the center circle 11C is applied to generate the dynamic pressure in the thrust direction. In addition, an approximately belt-like splash preventing projection patterns 13 act for pulling the liquid supposed to be splashed to the outside through a centrifugal force generated through rotation. Further, in the above-described structure, by forming the widths of the belt-like parts 11L and 11R in approximately fixed widths, the area of the dynamic pressure generating projection patterns can be reduced by about 35%, corresponding to the amount by which rotation load is reduced to allow a stable reduction of power consumption.

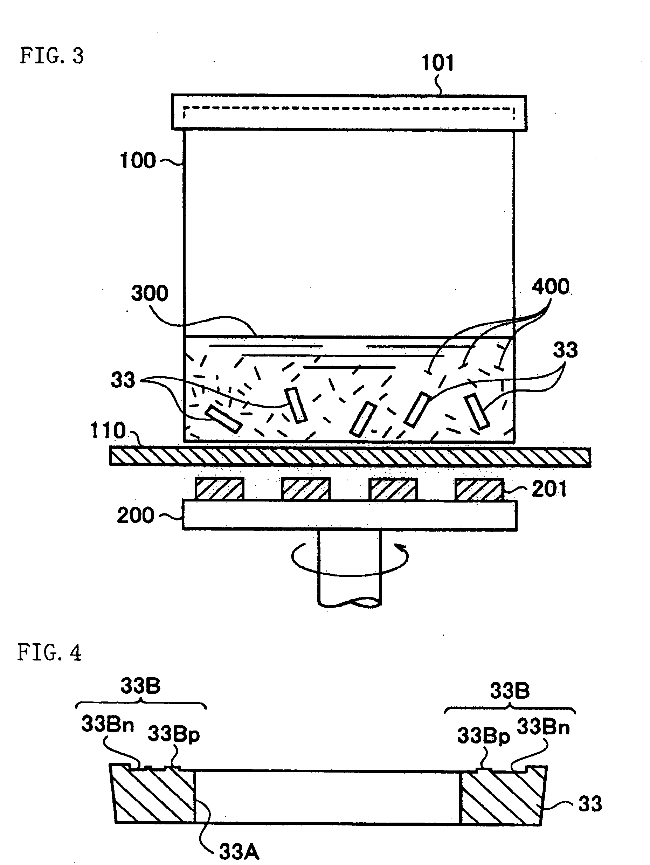

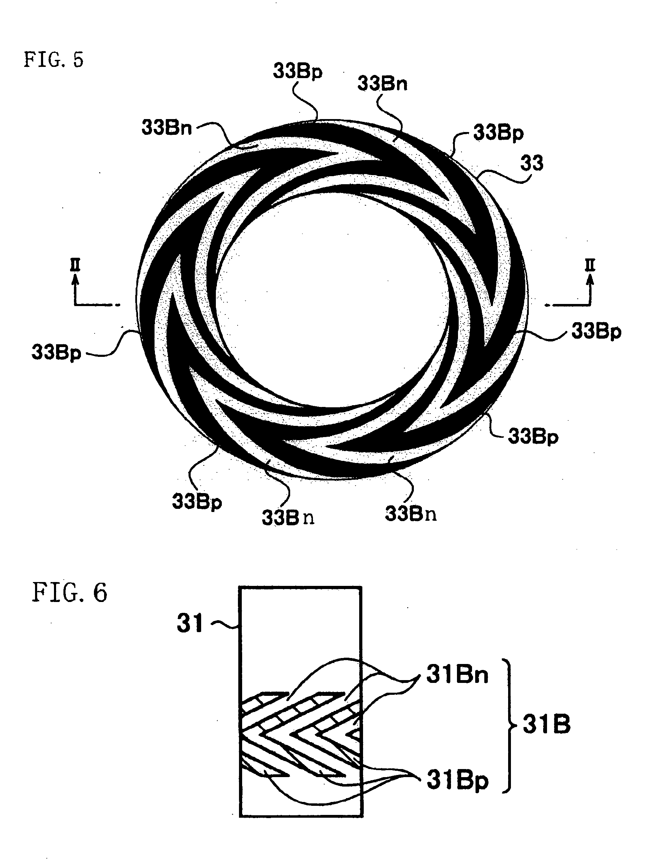

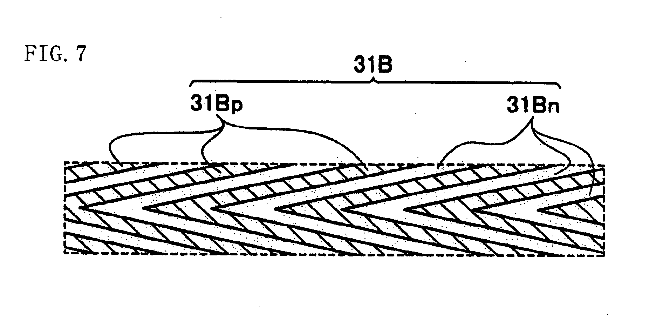

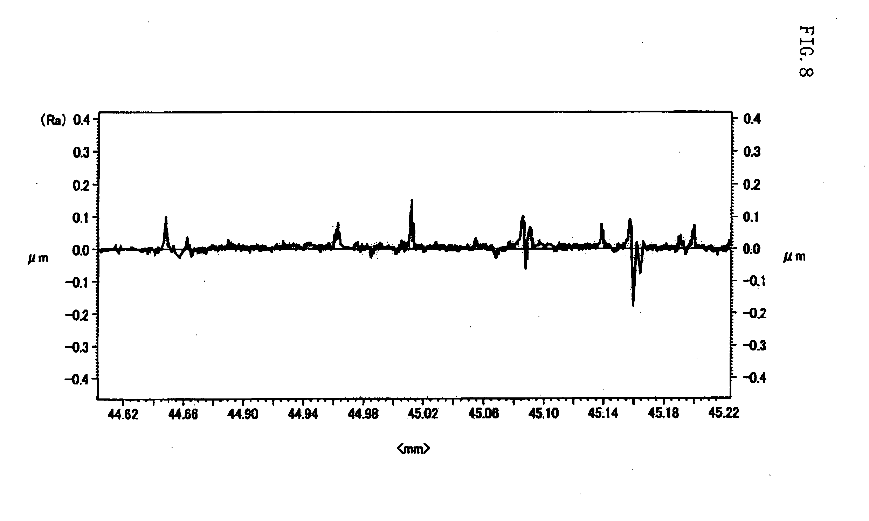

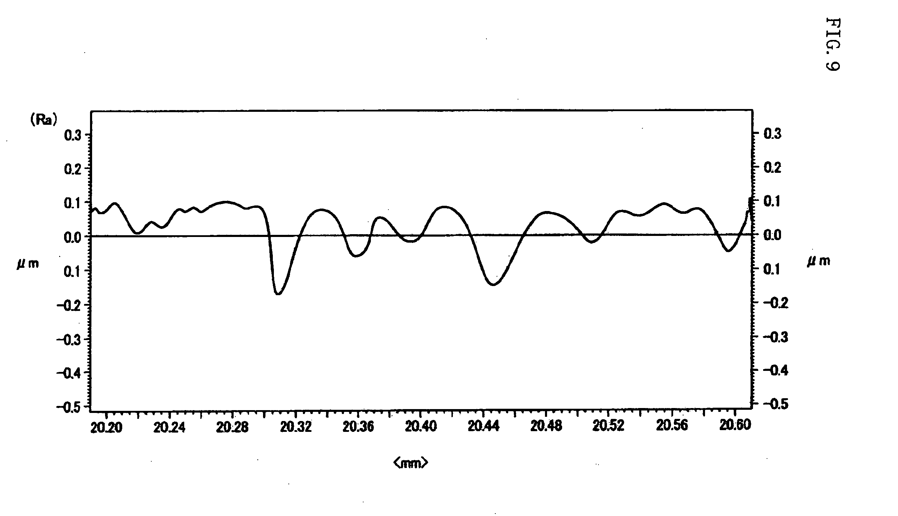

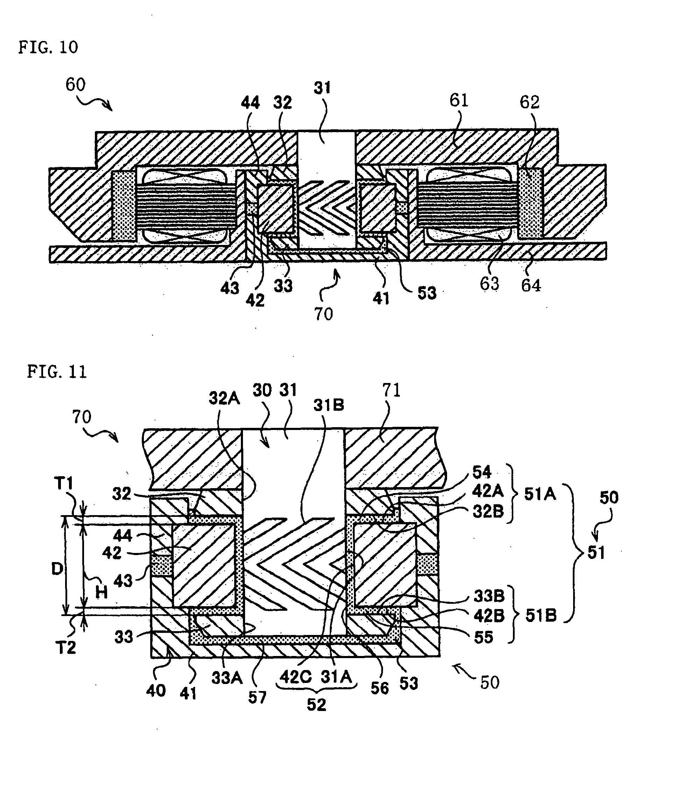

Fig.3 is an explanatory view of magnetic barrel polishing in a method of manufacturing the dynamic pressure bearing part according to the embodiment of the present invention, Fig.4 is a sectional view of a second annular member 33 serving as the dynamic pressure bearing part according to the embodiment of the present invention, Fig.5 is a plan view of the second annular member 33, Fig.6 is a side view of a rotating part 31 serving as the dynamic pressure bearing part according to the embodiment of the present invention, Fig.7 is a development view of a recess/projection pattern 31B formed on the surface of the rotating part 31, Fig. 8 is a graph showing a measurement result of a surface roughness of recess/projection patterns after performing a precision polishing by using the abrasive grain, Fig.9 is a graph showing a measurement result of the surface roughness of recess/projection patterns after performing magnetic barrel polishing, Fig.10 is a sectional view showing an example of assembling the dynamic pressure bearing part according to the embodiment of the present invention into an HDD rotating part 60, and Fig.11 is an enlarged view of the dynamic pressure bearing device 70.

A method of manufacturing the dynamic pressure bearing part according to the embodiments will be explained with reference to the drawings.

First, the dynamic pressure bearing part is machined in a predetermined shape by predetermined means, and when manufacturing the dynamic pressure generating bearing member, recess/projection patterns for generating dynamic pressure are formed on the surface. Subsequently, a surface machining such as predetermined polishing is performed on the surface, to finish a surface condition having a predetermined planarity and surface roughness. When manufacturing the dynamic pressure bearing member, which is a mating member of the dynamic pressure generating bearing member, the same step as that of the dynamic pressure generating bearing member is executed other than recess/projection patterns which are not formed, to finish the surface condition. Accordingly, the dynamic pressure generating bearing member will be explained as an example hereunder, and the explanation regarding the dynamic pressure bearing member, which is the mating member, is omitted. The second annular member 33 shown in Fig. 4 and Fig. 5 is a kind of the dynamic pressure generating bearing member, and a kind of the thrust bearing. Also, the rotating part 31 as shown in Fig. 6 and Fig. 7 is a kind of the dynamic pressure generating bearing member and a kind of a journal bearing.

When manufacturing the second annular member 33, a plate material is cut into an annular member of a predetermined dimension, and subsequently dynamic pressure generating recess/projection patterns comprising projection parts 33Bp and recess parts 33Bn are formed on one of the surface 33B by using a known photolithography method and an electrochemical machining method. When manufacturing the rotating part 31, the plate material is cut into a circular column-like member of a predetermined dimension, and subsequently the dynamic pressure generating recess/projection patterns comprising projection parts 31Bp and recess parts 31Bn are similarly formed on a surface 31A by using the known photolithography method and the electrochemical machining method.

Next, precision polish processing is applied on the surface of the dynamic pressure bearing part material on which the dynamic pressure generating recess/projection patterns are formed in the recess/projection pattern forming step. Specifically, in the above polishing step, the surface condition is finished to be a mean roughness of about Ra=0.04µm by polishing using a plane surface polisher (lap polisher or polishing polisher) or by cylindrically grinding the surface. Fig. 8 is a graph showing a measurement result of the surface roughness of the recess/projection patterns after performing the precision polish processing by using the abrasive grain. Note that a tracer type surface roughness gauge developed by Taylor-Hobson Limited, was used for the measurement of the surface roughness.

Next, the magnetic barrel polish processing is further applied on the surface on which the above polishing is already applied. As shown in Fig.3, the surface machining step includes the magnetic barrel polishing which functions to polish a material to be polished in such a manner that a fluid 300 and magnetic media 400 serving as bodies to be polished, and dynamic pressure bearing parts 33 serving as bodies to be polished are contained in a vessel 100 placed on a fixing bed 110, and the vessel 100 is covered with a lid 101. Then, the magnetic media 400 is caused to move by a magnetic field generated by motion in the outer part where a magnet 201 is fixed on a turntable 200, thus polishing the body to be polished.

In this case, as the fluid 300, for example, the fluid obtained by adding compounds of about 5cc (1 to 2% of the whole body) and citric acid of about 0.1g based on water of 350 to 400cc is used. Also, as the magnetic media 400, for example, a magnetic stainless pin of 0. 5mm in diameter and 5mm in length is used by containing 150 to 180g of it in the vessel based on the aforementioned fluid. Then, by rotating the turntable 200 at about 600rpm, polishing is performed over the body to be polished for about 30 minutes. Fig.9 is a graph showing the measurement result of the surface roughness on the surface of the recess/projection patterns after the magnetic barrel polish processing is performed. Note that a tracer type surface roughness gauge developed by Taylor-Hobson Limited, was used for the measurement of the surface roughness.

As shown in Fig.8, the surface roughness of the surface of the recess/projection patterns after precision polish processing, is finished to be a mean roughness of about Ra=0.04µm, which is an extremely high precision. Meanwhile, as shown in Fig. 9, the surface after the magnetic barrel polishing is applied appears to be rather lowered in precision numerically. However, when analyzing the surface condition shown in Fig. 8, there are a lot of sharp projections and recesses, and therefore it can be so considered that in polishing by using the abrasive grain, easily exfoliated scuffing, fuzz, or burrs are frequently generated on a metal surface. Accordingly, the bearing is easily worn during actuation and such a scuffing, fuzz, or burrs become foreign substances after exfoliation, thereby causing the breakage of the bearing.

Meanwhile, the surface after subjected to the magnetic barrel polishing appears to be rather lowered in precision numerically. However, the easily exfoliated scuffing, fuzz, or burrs are removed, the metal surface is smoothened, and loose and moderately large recess/projection patterns are formed on the surface, and further the metal surface is strengthened to eliminate the possibility of the exfoliation, etc. As a result, effects can be obtained in such a way that the durability is extremely improved and the tight contact phenomenon can be prevented.

Explanation will be given hereunder to the example of using the above-described dynamic pressure bearing part for the HDD rotating part. In Fig. 10, a dynamic pressure bearing device 70 is disposed in the center of the HDD rotating part 60. In the upper part of the rotating shaft member 31 arranged in the rotation center of the dynamic pressure bearing device 70, a hub 61 loaded with a disk for data storage which is not shown is fitted and fixed, so as to be rotated together with the rotating shaft member 31. In addition, in the inner circumferential surface of the hub 61, a motor driving magnet member 62 is fitted and fixed, and at the inner side of the motor driving magnet member 62, a motor stator part 63 fixed to a stator support member 64 is provided. The motor driving magnet member 62 is rotated and driven by an alternating field generated by an alternating current given to the motor stator part 63, and the disk for data storage is accordingly rotated together with the hub 61.

In the HDD rotating part 60, for example, the hub 61 is set to be about 20mm in outer diameter (diameter), the dynamic pressure bearing device 70 is set to be about 1.5 to 5.8mm in thickness of the whole body (height dimension) depending on the structure of the motor stator part 63, and the rotating shaft member 31 is set to be about 2mm in shaft diameter (diameter). In Fig. 11, the dynamic pressure bearing device 70 comprises a rotating part 30 and a fixed part 40. In addition, between the rotating part 30 and the fixed part 40, a dynamic pressure bearing member 50 is formed, and the rotating part 30 is rotatably supported by the fixed part 40 through the dynamic pressure bearing member 50.

The rotating part 30 comprises a cylindrical rotating shaft member 31 and an annular ring-shaped first annular member 32 and second annular member 33 which are fitted and fixed on the outer circumferential surface of the rotating shaft member 31. Only the inner circumferential surfaces 32A and 33A of the first annular member 32 and second annular member 33 are fixed by the adhesive applied to a fitting surface to the outer circumferential surface 31A of the rotating shaft member 31, and the adhesive is neither applied on the upper end face nor applied on the lower end face.

The fixed part 40 comprises a saucer-shaped lower part support member 41 arranged on the lower end side of the rotating shaft member 31, an annular ring-shaped intermediate member 42 fitted and fixed on the upper part of the lower part support member 41 and disposed between the first annular member 32 and the second annular member 33, an annular ring magnet member 43 disposed on the outer circumferential side of the intermediate member 42, and an approximately flange-shaped upper yoke 44 disposed on the upper side of the magnet member 43 and fitted and fixed on the outer circumferential surface of the intermediate member 42. Note that no load is applied on a bottom plate of the lower part support member 41, and the bottom plate functions only to encapsulate liquid. Therefore, it is sufficient to set the plate to be about 0. 05mm in thickness, thereby occupying almost no space in a height direction.

The dynamic pressure bearing part 50 comprises a thrust bearing part 51 on which the load in a thrust direction to act on the rotating part 30 is applied, and a journal bearing part 52 on which the load in a radial direction to act on the rotating part 30 is applied. In addition, the thrust bearing part 51 is formed by two layers of an upper side thrust bearing part 51A and a lower side thrust bearing part 51B. The upper side thrust bearing part 51A comprises a lower end face 32B of the first annular member 32, an upper end face 42A of the intermediate member 42 opposed to the lower end face 32B, and a working fluid 53 for generating dynamic pressure filled in a first space 54 formed between the opposing surfaces 32B and 42A.

The lower side thrust bearing part 51B comprises an upper end face 33B of the second annular member 33, a lower end face 42B of the intermediate member 42 opposed to the upper end face 33B, and the working fluid 53 for generating dynamic pressure filled in a second space 55 formed between the opposing surfaces 33B and 42B. The journal bearing part 52 comprises an outer circumferential surface 31A of the rotating shaft member 31, an inner circumferential surface 42C of the intermediate member 42 opposed to the outer circumferential surface 31A, and the working fluid 53 for generating dynamic pressure filled in a third space 56 formed between the opposing surfaces 31A and 42C.

The recess/projection patterns for generating dynamic pressure, which are not shown, are respectively formed on either surface of the opposing surfaces 32B or 42A forming the upper side thrust bearing part 51A, and on either surface of the opposing surfaces 33B or 42B forming the lower side thrust bearing part 51B. The shape and the depth of the recess/projection patterns are arbitrary, and may be a general shape and depth suitable for generating dynamic pressure. In addition, in the outer circumferential surface 31A of the rotating shaft member 31 forming the journal bearing part 52 also, the recess/projection pattern 31B for generating dynamic pressure is formed in a belt-like region that circles the outer circumferential surface 31A. However, the shape and the depth of the recess/projection pattern 31B are arbitrary, and may be a general shape and depth suitable for generating dynamic pressure, and not limited to the shape shown in the figure. Moreover, the first space 54, the second space 55, the third space 56, and the space 57 formed between the lower end face of the rotating shaft member 31 and the second annular member 33, and the bottom face of the lower part support member 41 are all mutually connected.

At least in a part of the first annular member 32, which is a constructional element arranged in the vicinity of a boundary surface 53A between the working fluid 53 and an outer part space 60, and the surface of the upper yoke 44, shown by one dot chain line in the figure is applied with an oil-repelling agent for preventing the bleeding of the working fluid 53. Note that the oil-repelling agent may be applied on the part other than the part shown by one dot chain line in the figure. For example, as will be described later, when mechanical machining of the first annular member 32 and the upper yoke 44 is performed, and if using the oil-repelling agent instead of a cutting agent, the whole body of the members 32 and 44 are covered with the oil-repelling agent. However since the film thickness is minute, this is out of the question. In addition, the part of the surface of the first annular member 32 shown by the one dot chain line is formed in a tapered surface 32C.

A magnetic fluid is used for the working fluid 53, and a first magnetic fluid 53B is arranged in the vicinity of the boundary surface 53A, and a second magnetic fluid 53C having a lower concentration than the concentration of the first magnetic fluid 53B is arranged in a part other than the vicinity of the boundary surface 53A, that is, in the spaces 54 to 57. Here, as the first magnetic fluid 53B, for example, the magnetic fluid of about 100 to 200 gauss sufficient enough to be held in a ferromagnetic field can be preferably used. Meanwhile, as the second magnetic fluid 53C, for example, the magnetic fluid of low concentration and 10 to 30 gauss saturation magnetization which is infinitely close to a general lubricant (metallic particulates content is about 1/4 compared with the magnetic fluid of 200 gauss saturation magnetization) can be preferably used.

The magnet member 43 is made magnetic in a direction along the center of the rotating shaft member 31 (vertical direction in the figure), thereby forming a magnetic closed circuit by a route of the magnet member 43-the upper yoke 44-the first annular member 32-the rotating shaft member 31-the second annular member 33-the lower support member 41-the magnet member 43. Accordingly, the ferromagnetic field is formed in the vicinity of the boundary surface 53A, that is, the outer circumferential surface of the first annular member 32 and the inner circumferential surface of the upper yoke 44 opposed thereto, thereby holding the first magnetic fluid 53B. The magnet member (Sm-Fe-Nmagnet) formed by arranging samarium, iron, and nitrogen can be preferably used for the magnet member 43, for example. This is a bonded magnet of about 5µm in particle diameter.

When the durability test of the HDD rotating part having the above-described structure is conducted, it has been found that the HDD rotating part is durable for the repeated CSS tests of more than 1,300,000 times.

The present invention can be used for a dynamic pressure thrust part forming a dynamic pressure generation part of a dynamic pressure bearing device used as a thrust bearing of a rotation part of a disk rotary type memory device such as a driving device including a hard disk drive (HDD) and a digital versatile disk (DVD), and a polygon mirror, etc., and a method of manufacturing the dynamic pressure bearing part.

## Claims

1. A dynamic pressure thrust bearing part having dynamic pressure generating patterns comprising projection parts and recess parts for generating dynamic pressure formed on a surface, wherein the dynamic pressure generating projection pattern has a profile shape of a herringbone type having belt-like parts which are branched out from a tip end to a rear end so as to form a double fork shape, and widths of the belt-like parts are set to be fixed width.

2. The dynamic pressure thrust bearing part according to claim 1, wherein an area of the projection pattern is made to be smaller than the area of a recess pattern.

3. The dynamic pressure thrust bearing part according to either of claim 1 or claim 2, wherein a plurality of herringbone tips are arranged so as to be located on a central line for drawing a specific circle around the center of rotation of the bearing member, and a contour line facing the central line side has a dynamic pressure generating curve for generating dynamic pressure by crossing the flow of a fluid at a predetermined angle, to collect the fluid in the central line.

4. The dynamic pressure thrust bearing part according to any one of claims 1 to 3, wherein the dynamic pressure generating curve is a curve by which distance from the center of rotation varies with logarithm against variations of the rotation angle.

5. The dynamic pressure thrust bearing part according to any one of claims 1 to 4, wherein an approximately belt-like splash preventing projection pattern is formed separately from the dynamic pressure generating pattern, the splash preventing projection pattern having a contour shape to act for pulling the liquid supposed to be splashed to the outside through a centrifugal force generated through rotation.

6. A method of manufacturing a dynamic pressure bearing part comprising:
machining a material of the dynamic pressure bearing part into a predetermined shape; and
machining the surface of the material of the dynamic pressure bearing part thus machined into the predetermined shape, into a predetermined surface condition,
wherein the surface machining step has a magnetic barrel polish processing which functions to polish a material to be polished in such a manner that a fluid, magnetic media serving as a body to be polished, and a body to be polished are contained in a vessel, and the magnetic media is caused to move by a magnetic field generated by motion in the outer part, thereby polishing the body to be polished.

7. The method of manufacturing the dynamic pressure bearing part according to claim 6, wherein the surface machining step performs the magnetic barrel polish processing after precisely polishing by using an abrasive grain.

8. The method of manufacturing the dynamic pressure bearing part according to either of claim 6 or claim 7, wherein the magnetic media used for the magnetic barrel polish processing is made by a magnetic stainless steel wire of a predetermined length.
